# EUROPEAN PATENT SPECIFICATION

(11) **EP 1 695 586 B1**
(45) Date of publication and mention of the grant of the patent: **02.01.2008**
(21) Application number: 04798672.4
(22) Date of filing: 25.11.2004
(51) Int. Cl.: H04Q 7/38, H04M 3/523, H04M 3/533

(54) **METHOD AND SYSTEM FOR TRANSMITTING VOICE MESSAGES**
VERFAHREN UND SYSTEM ZUM SENDEN VON SPRACH-NACHRICHTEN
PROCEDE ET SYSTEME DE TRANSMISSION DE MESSAGES VOCAUX

(30) Priority: 03.12.2003 GB 0328035
(43) Date of publication of application: 30.08.2006
(73) Proprietor: BRITISH TELECOMMUNICATIONS public limited company, London EC1A 7AJ (GB)
(72) Inventor: SCAHILL, Francis James, Ipswich, Suffolk IP8 4NG (GB); RINGLAND, Simon Patrick Alexander, Ipswich, Suffolk IP10 0LY (GB)
(74) Representative: Nash, Roger William
(86) International application number: PCT/GB2004/004970
(87) International publication number: WO 2005/055639

(56) References cited:
- US-A- 6 075 844
- US-A1- 2003 109 247
- US-A1- 2003 191 639
- US-B1- 6 556 671
- KELLNER A ET AL: "Strategies for name recognition in automatic directory assistance systems" INTERACTIVE VOICE TECHNOLOGY FOR TELECOMMUNICATIONS APPLICATIONS, 1998. IVTTA '98. PROCEEDINGS. 1998 IEEE 4TH WORKSHOP TORINO, ITALY 29-30 SEPT. 1998, NEW YORK, NY, USA,IEEE, US, 29 September 1998 (1998-09-29), XP002264883 ISBN: 0-7803-5028-6

## Description

### Technical Field

The present invention relates to a communications method and system which uses speech recognition technology to analyse a voice message so as to determine its intended destination.

### Background to the Invention and Prior Art

Mobile packet based half-duplex voice messaging systems are known in the art. Referred to colloquially as "push-to-talk" (PTT) systems, they have been commercially available within the United States for some years, provided by Nextel Communications, under the service mark "Direct Connect".

Such PTT systems have also been developed to operate within an internet protocol (IP) environment, with voice over IP (VoIP) systems. In particular both General Packet Radio Services (GPRS) and Code Division Multiple Access (CDMA) based VolP PTT systems are known in the art, such as those produced by Motorola (see
http://www.motorola.com/mediacenter/news/detail/0,1958.3069_2512_23,00,html) and Qualccomm (see http://www.qualcomm.com/press/releases/2002/020111_qchat_voip.html).

When using a PTT system, usually a user will select the intended receiver from an address book list maintained on his own handset using a graphical interface and the device's own user controls, as is well known in the art. It is also known to provide for voice dialling of PTT services, however, and an example prior art device which provides such functionality is the pocket adapter produced by Cellport Systems Inc. of Boulder , CO, for the Motorola iDEN i1000 and i1000 plus mobile telephones. The user guide for the Cellport pocket adapter can be found at http://www.cellport.com/adapterquides/nextel_i1000_PAG.pdf. As set out therein, such voice dialling comprises the user speaking predetermined code words, followed by the identification (such as the number, but alternatively a speed dial code) of the receiver which the user wishes to connect to, before the voice message which the user wishes to send is spoken. For example, in the Cell port system, using voice dialling a user would speak the words "Cellport, dial, pound, pound, 6284". The adapter then repeats the recognised words "pound, pound, 6284", and then the connection process is performed. The user can then speak his message by pressing the PTT button in the usual way.

Even with such voice dialling functionality, however, there is still a separate "dialling phase", where the user must select the intended recipient, either by using a normal graphical interface, or by using the voice dialling interface, and it is not until such dialling phase has been completed and a connection established that the user may speak his first message. This separate dialling phase therefore introduces a delay in allowing a user to speak his message, and also necessitates additional user interaction with the device, either in the form of navigating the graphical displays, or by speaking in accordance with the voice dialling protocols.

US6,075,844 describes a messaging system in which a message is recorded on a recording device and then later sent to a recipient. The person recording the message says the name of the recipient at the beginning of the message and based on that utterance the system decides where to send the message once it is uploaded to a communications network.

The document EP-1 041 779-A2 discloses a telephony network based on Internet Protocol (Voice over IP). A first telephone is connected by voice channel to a directory server. The telephone has a single multipurpose button. This button can be pressed by the caller to provide the name of a person to call. The directory server then determines based on the voice input the name of the recipient from a speech input sent over the voice channel and returns to the first phone the IP address corresponding to recognized name. The first telephone then attempts to establish a call based on said IP address with a second telephone corresponding to the called party. If said party responds to the call, a communication between the two telephones can take place. Alternatively the routing server can connect the first telephone to the second telephone. In this document the voice dialling step takes place prior to the actual calling step.

Another document WO01/78245 discloses a mobile telephone messaging method characterizing by a user pressing a key of the mobile phone and speaking an utterance comprising one command such as "tell", a name of a recipient, and a message keyword. A message is chosen based on the keyword from a predefined list of messages and sent to the identified recipient.

### Summary of the Invention

The invention aims to improve on the above described operation by removing the separate dialling phase from the user interface. More particularly, the invention makes use of speech recognition and associated technology to analyse a spoken message so as to identify an intended receiver for the message, and to transmit the message or at least a variant thereof (such as the text of the message as obtained by the speech recogniser) towards the intended recipient via a network. This allows a user to simply push the PTT button on his handset and immediately speak his message (preferably including within his message some indication of the intended recipient, such as a name or the like), without having to undergo a separate dialling phase beforehand.

In view of the above, from a first aspect there is provided a communications method comprising the steps of:-
receiving at a router server in a communications network an audio stream containing an utterance when a user presses a button on a handset and starts to talk;
buffering the received audio stream ;
performing a speech recognition process on the received audio stream to recognise the utterance contained therein;
determining, if possible, an intended receiver of the audio stream in dependence on the recognised utterance; and
if an intended receiver was determined, transmitting the audio stream to the determined intended receiver using a half-duplex communications service provided by a packet-switched network.

Further aspects also provide a computer program according to claim 9, a computer readable recording medium according to claim 10 and a communications system according to claim 11.

As set out above, the invention provides the advantage that no separate dialling phase need be undertaken before a user may speak the message. This enhances the communication experience for the user, and makes the half-duplex communications service more pleasant and user friendly to use.

In an embodiment of the invention, when the determining step determines one or more possible intended receivers from the recognised utterance, the method further preferably comprises the steps:
indicating the one or more possible intended receivers to a user; and
receiving a selection signal from the user indicating the one or more determined possible intended receivers to which the message should be transmitted.

Thus, where the determining step has identified one or more potential intended recipients for a message, clarification of which of the identified possible intended recipients may be sought from the user. Preferably, for ease of interface, the indicating step further comprises generating an audio speech prompt corresponding to the plurality of possible intended receivers; and outputting the generated audio speech prompt to the user. Such a further feature allows for an audio output prompt from the user device.

Moreover, in embodiments of the invention the speech recognition process is preferably performed only on a portion of the received voice message. Such a feature recognises that it is likely that the intended recipient of a message will be indicated probably at the start of a message (e.g. consider the message "Hi Roger, are you going to the pub this evening?" - the intended recipient ("Roger") is identified in the first phrase), and hence speech recogniser resources may be conserved by performing only that amount of recognition which is necessary.

Furthermore, in embodiments of the invention the further steps of: receiving an indication of the identity of a user who generated the message; and selecting a user-dependent speech grammar for use by the speech recognition process in dependence on the identity of the user are included. This allows a user-specific grammar to be used with the speech recognition process, which grammar may have encoded therein address book data and the like.

Additionally, embodiments of the invention may further comprise the steps of receiving a speech recognition activation signal from a user, wherein the speech recognition and determining steps are performed in dependence on the receipt of such a signal. Such functionality allows a user to explicitly indicate when a message is a message to a new recipient, and hence that the speech recognition and receiver determination steps should be performed. This further improves the efficiency of use of speech recogniser resources, and also improves the overall operation of the invention, as the speech recognition and receiver determination steps will only be performed on messages (typically first messages in a thread) for which there is a high likelihood that some sort of receiver identity such as a name or the like will be spoken therein, and hence a correspondingly high likelihood that the intended recipient will be capable of determination.

### Brief Description of the Drawings

Further features and advantages of the present invention will become apparent from the following description of an embodiment thereof, presented by way of example only, and by reference to the accompanying drawings, wherein:-
Figure 1 is an architectural system block diagram of an embodiment of the present invention;
Figure 2(a) is flow diagram illustrating the method steps involved in the embodiment of the invention; and
Figure 2(b) is a flow diagram continuing the flow diagram of Figure 2(a).

### Description of the Embodiment

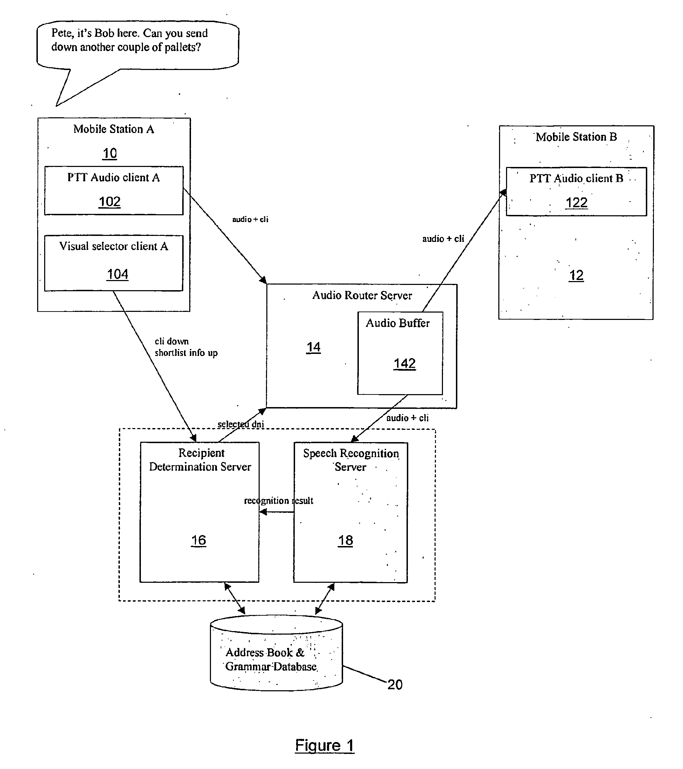

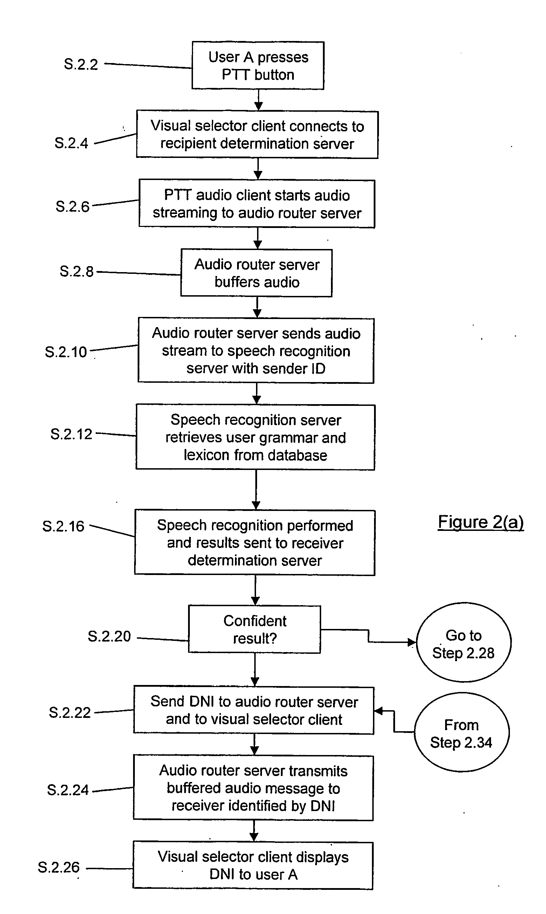

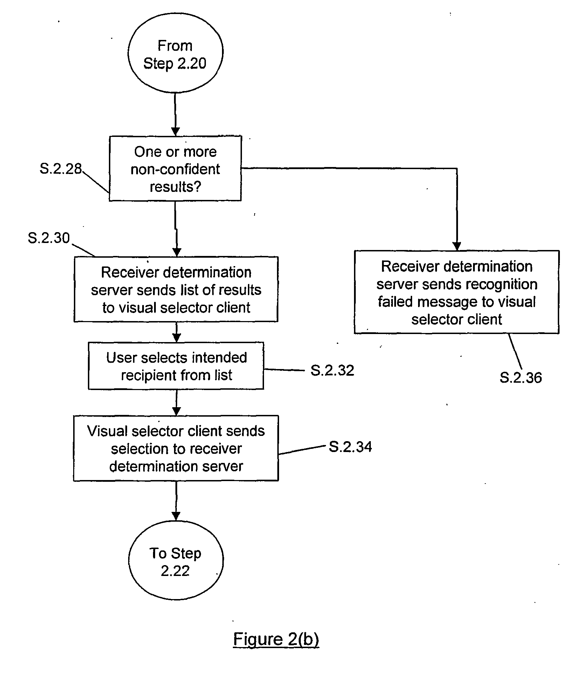

An embodiment of the present invention will now be described with respect to Figures 1, 2(a) and 2(b).

The embodiment of the invention provides a voice steered push to talk (PTT) service. More particularly, the embodiment of the invention is intended to provide a push to talk communication service which may use any of the PTT communications technologies already known in the art and discussed in the introductory portion to this specification, and which then adds thereto functionality which allows the push to talk communications to be directed to an intended recipient or destination without undergoing any explicit dialling phase. Instead, within embodiments of the invention, speech recognition is performed on the spoken messages and a speech grammar applied to determine intended recipients or destination of the message, the message then being forwarded to the intended recipient or destination thus determined.

In view of the above, Figure 1 illustrates an overall system architectural block diagram illustrating the main system elements of an embodiment according to the present invention. With reference to Figure 1, therefore, within the embodiment of the invention there is provided an audio router server 14 which is arranged to receive streamed digital audio signals carried by a PTT communication service on a network (not shown) from PTT-enabled handsets, as well as calling line identifier (CLI) information. The audio router server 14 is provided with an audio buffer 142, being a data storage medium such as RAM, a hard disk, an optical storage medium, or the like, and which is intended to store any received audio messages therein temporarily. Additionally provided by the embodiment is a speech recognition server 18, which is arranged to receive digital audio from the audio buffer 142 at the audio router server together with the CLI information, and also to receive speech grammar and lexicon data for use in a speech recognition process, from an address book and grammar database 20. In use, the speech recognition server 18 runs a speech recognition application to apply a user specific grammar to the digital audio received from audio buffer 142, so as to recognise any spoken utterance therein, and determine an intended recipient. It should be noted that the speech recognition application run by the speech recognition server may be any speech recognition application presently known in the art, but preferably a speaker independent speech recognition application. Suitable speech recognition software which was available before the priority date and which may be used by the speech recognition server 18 in the present embodiment is Nuance 7, from Nuance Communications Inc, of 1005 Hamilton Court, Menlo Park, CA 94025.

The speech recognition server 18 is further arranged to pass a recognition result, being preferably a set of key-value pairs representing the values of particular grammar slots in the recognised speech together with their associated recognition confidence values, to a recipient determination server 16. The recipient determination server is arranged to receive the key-value pairs, and to take action appropriately dependent on the key value pairs returned by the recogniser, as will be described later. One of the possible actions which the recipient determination server can perform is to pass an address in the form of a Dialled Number Identifier (DNI) to the audio router server 14. Additionally, the recipient determination server 16 is further arranged to receive calling line identifier (CLI) data from user handsets (described later) and also to send shortlist information to user handsets, as will also be described later.

Returning to a consideration of the address book and grammar database 20, this stores, for each registered user of the system, a speech recognition grammar which encodes address book data relating to names of possible recipients and their respective DNls. A separate user specific grammar is stored for each registered user. An example format for a grammar is shown below:-

```
 Names
 (
 [
    ( bob ) { return("Bob Smith +447711123456")}
    ( peter jones ) { return("Peter Jones +447722123456") } w
    ( pete ) { return("Pete Brown +447733123456") }
 ]
 )

 Phonemes:filler
 [
 ph1
 ph2
 ...
 ph41
 ]

 Fillers:filler
 [
   Phonemes
   @-@
 ]

 EndCal1
 [
    end call
    over and out
 ]

 Overall
 [
    ( ?hi +Names:n ?(it's Bob) *Fillers) {<action "placecall">
 <recipient $n>}
   *Fillers
   EndCal1 {<action "endcall">}
 ]
```

The creation of the dialling grammar may be by any of the well known techniques using either text (e.g. getting a copy of user telephone's address book) or combination of the address book for the number part and spoken input to define the name pronunciation.

The above description relates to the various servers which are preferably contained within or form part of a network providing the half duplex PTT communications service. In order to describe the operation of the embodiment in more detail, however, it is necessary also to describe the special features of the mobile user handsets adapted for use with the present invention. Figure 1 also illustrates such a handset, in the form of mobile station A (10). Mobile station B (12) is also shown, but this may be a conventional PTT enabled handset, as is already known in the art.

Referring therefore to mobile station A (10), the mobile station A (10) is provided with a PTT audio client A (102), being the appropriate software to control mobile station 10 to provide conventional PTT functionality. That is, the PTT audio client A (102) enables the mobile station 10 to use a PTT service in a conventional manner. The main difference with the prior art, however, is that the PTT audio client A (102) is arranged to send the digitised audio data produced by the handset A to the audio router server 14, together with the calling line identifier of the mobile station 10.

Additionally provided within the mobile station 10 is a visual selector client A (104). This is a further software program which is arranged to interface with the recipient determination server 16 within the network, so as to send the calling line identifier (CLI) of the mobile station 10 thereto when a PTT call is first initiated, and also to receive a list of candidate recipient identities from the recipient determination server 16, in the event that more than one intended recipient is determined thereby. The visual selector client A (104) is further arranged to display such a short list of candidates to the user on a display of the mobile station A, and to permit the user to select the intended recipient. Selection information is then transmitted back to the recipient determination server 16.

Within the conventional mobile station B (12), a PTT audio client B (122) is provided, which is essentially the same as the PTT audio client A (102) provided in the mobile station 10. The PTT audio client B (122) is arranged to provide the mobile station B (12) with conventional PTT functionality, and the only difference between the PTT audio client B (122) and the prior art is that the PTT audio client B (122) is arranged to receive a PTT message from the audio buffer 142 which is part of the audio router server 14. In all other respects, the mobile station B12 may be conventional.

The operation of the embodiment of Figure 1 will now be described with respect to Figures 2(a) and (b).

In this example description of the operation of the embodiment, let us assume that mobile station A does not have any PTT calls in progress, and wishes to send a PTT message to mobile station B. That is, the present state of mobile station A is that it has not sent or received any PTT calls to any other station for at least a PTT timeout period (usually 20 seconds). In view of this, within the embodiment of the invention in order to initiate a call from mobile station A to mobile station B at step 2.2 user A presses the PTT button. The pressing of the PTT button on the mobile station A causes the PTT audio client 102 to start running, as well as the visual selector client 104. At step 2.4 the visual selector client 104 connects to the recipient determination server 16, and sends the calling line identifier (CLI) of the mobile station A to the recipient determination server 16. Next, (or almost simultaneously or beforehand - the order of steps 2,4 and 2.6 is not important) the PTT audio client 102 connects to the audio router server 14, and starts streaming digitised audio to the audio router server 14. It is at this point, at step 2.6, that user A of mobile station A speaks the message which he wishes to be transmitted by the PTT service, and the mobile station A digitises and packetises the message for streaming in the audio stream to the audio router server 14. Such digitisation and packetisation is well known in the art. In addition to streaming the audio to the audio server 14, the PTT audio client 102 also sends the calling line identifier (CLI) of the mobile station A to the audio router server 14.

At step 2.8, the audio router server buffers the received audio stream in the audio buffer 142, and also forwards a copy of the audio stream to the speech recognition server 18, at step 2.10. At the same time, the audio router server 14 also sends the mobile station A calling line identifier to the speech recognition server 18.

Next, at step 2.12, the speech recognition server 18 uses the received calling line identifier of the mobile station A to access the address book and grammar database 20, so as to retrieve therefrom the specific user grammar which is stored therein for the mobile station A. It will be appreciated that the speech recognition grammar and lexicon is stored in the address book and grammar database 20 indexed by CLI, to allow for the grammar and lexicon specific to the mobile station A to be retrieved.

Next, at step 2.16 the speech recognition server 18 performs a speech recognition process on the audio stream received from the audio router server 14. Note that the speech recognition server 18 may perform speech recognition on the received audio stream as the stream is received, or alternatively may wait until silence is detected in the stream before commencing recognition [ or the end of the stream when the PTT button is released ]. This choice will depend on the precise speech recognition software chosen for use within the speech recognition server 18. The speech recognition process performed by the speech recognition server 18 acts to recognise the user utterance contained within the audio stream received from the audio router server 14, using the recognition grammar for the user to guide the recognition process. Within the embodiment the speech recognition server then returns key information to the recipient determination server via Nuance NL slots (when the Nuance 7 recogniser mentioned earlier is used), so, for example, for the utterance "over and out" the recogniser would return a key value pair of *action=endofcall,* while for "Hi Bob, it's Bob" the recogniser would return two key value pairs: *action=placecall* and *recipient="Bob Smith +447711 i23456';* as determined by the user grammar. With the key-value pairs the recogniser also provides a recognition confidence value indicative of how confident it is of any particular recognition leading to a particular key-value pair being correct. Such recognition confidence values are well known in the art.

Having performed the recognition, and output the key-value pairs and confidence values to the recipient determination server, at step 2.20 an evaluation is performed by the recipient determination server on the confidence values of the returned key-value pairs. Here, the confidence values may be compared with a threshold value or the like, and if the evaluation indicates that the recogniser is confident of the results, then processing may proceed to step 2.22. Here, at step 2.22 the recipient determination server 16 sends the DNI(s) of the determined intended recipient(s) and obtained from the received key-value pairs to the audio router server 14, and also, as confirmation, to the visual selector client 104 in the mobile station A. Then, at step 2.24 the audio router server transmits the buffered audio message from the audio buffer 142 to the receiver(s) identified by the DNI(s) received from the recipient determination server, using the PTT communications service. In this case, let us assume that the DNI(s) received from the recipient determination server identifies mobile station B, in which case the audio router server streams the audio message from the audio buffer 142 to the PTT audio client 122 in the mobile station B, over the usual PTT enabled network. At the same time, at step 2.26 the visual selector client 104 at the mobile station A displays the determined DNI(s) to the user A on the display of the mobile station A, as confirmation that the message has been forwarded properly. At that point, therefore, a PTT call has been set up by the audio router server between the mobile station A and the mobile station B, and PTT communications may then continue in a conventional manner.

It is important to note here that it is possible for the speech recognition server to confidently recognise two or more intended recipients, when two or more recipient identifier's are spoken (consider here the message "Pete, Bob, its Dave here", in which case both Pete and Bob are intended recipients). Due to the recognition grammar both or all of the intended recipient's DNIs may be returned, and due to the confident recognition of both or all it becomes clear that the message was intended for both or all recipients. In such a case the recipient determination server controls the audio router server to set up a group PTT call, to each of the determined intended recipients (Pete and Bob in the example). This feature therefore allows for calling groups for group calls to be defined dynamically, by simply indicating in the message the names of each of the intended recipients which are to be parties to the group call.

Returning to step 2.20, if the evaluation performed thereat does not indicate that there is a confident result, then the recipient determination server performs a further evaluation at step 2.28, to determine whether or not there are one or more non-confident results returned from the speech recogniser. If it is the case that no key-value pairs were returned, then the recognition process has failed. In this case the recipient determination server sends a message at step 2.36 to the visual selector client 104 at the mobile station A that recognition has failed, and a recognition failed message is then displayed to the user at the mobile station A. In such a case, the user A must then select the intended recipient for his message using the conventional graphical user interface.

On the contrary, however, if the evaluation of step 2.28 indicates that there are one or more non-confident results, then the user is invited to confirm the one or more non-confident results. Therefore, at step 2.30 the recipient determination server 16 sends a list of the one or more non-confident results to the visual selector client 104 at the mobile station A. Visual selector client 104 then displays the received list to the user on the display of the user on the display of the mobile station A, and at step 2.32 the user selects the intended recipient from the list. The visual selector client 104 then sends the selection information back to the recipient server 16 at step 2.34. The recipient determination server receives the selection information and then returns to step 2.22 wherein the selected DNI (or DNIs where multiple intended recipients are selected) is sent to the audio router server. Processing then proceeds to step 2.24 and onwards as described previously.

In view of the above description, therefore, it will be seen that the embodiment of the invention allows for convenient PTT communications without the user having to undergo a specific dialling phase, and waiting for a subsequent connection. In this respect, the invention makes use of the inherent latency in PTT communications, and in particular VolP implementations thereof, and exploits that latency to perform speech recognition and subsequent intended recipient determination on the message, to allow for automatic recipient or destination selection. The invention therefore provides an enhanced user experience over and above that provided by the conventional PTT communications services known in the art.

It will be appreciated that various modifications may be made to the described embodiment to produce further embodiments. For example, in a further embodiment in order to initiate the recognition and recipient determination process, the user A at the mobile station A must send an activation signal from the mobile station A, for example by double clicking the PTT button. Such a "double click" would cause the visual selector client A (104) to send an activation signal to the recipient determination server 16, which in turn sends an activation signal to the speech recognition server 18. Such an explicit activation operation may be beneficial to prevent the invention operating in unwanted circumstances.

As another variant, in further embodiments the user A may make a group call using the invention. Group calling using PTT is known *per se* in the art, and is included for use within embodiments of the invention by including within each user address book a group name, together with the associated telephone numbers which form part of the group. In operation, the user A speaks the group name, which is then recognised by the speech recognition server, and the stored group name applied to the user grammar to determine the DNls for the group. If the group name is recognised, then the recipient determination server sends each of the DNls belonging to the group to the audio router server 14, which then connects the group PTT call in a conventional manner.

In a further embodiment, the speech recognition server is arranged to recognise only the first few seconds of a message, so as to conserve speech recogniser resources. This feature is based on the premise that for most greetings the recipient name will be said within such a limit (consider the greetings: "Hello, Pete"; "Hi Bob,"; "Good Morning, Pete" etc.). Recogniser time limits of between 3 and 5 seconds should suffice for this purpose.

Regarding the selection of intended recipients in the event of non-confident results, in the embodiment above we describe the visual selector client displaying the shortlist to the user for visual selection. In other embodiments, however, the recipient determination server may include a speech synthesiser program which is used to generate audio prompts relating to the selections available, which are then routed to the PTT audio client 102 at the handset for playing to the user. Note that this may be performed simultaneously with the display of the shortlist by the visual selector client, such that the selections are presented by both audio and visual interfaces, or alternatively may replace the visual selection. In order to allow for spoken selection by the user of an intended recipient (for example, the user speaks "Yes" when the intended recipient is read out, and/or (optionally) "No" when the name of a non-intended recipient is played, or alternatively the user speaks "Bob Smith" to distinguish between Bob Smith and Bob Jones, previously referred to simply as "Bob"), the PTT audio client may transmit any user response to the speech recognition server via the audio router server for recognition of the responses.

Finally, as a further optional feature the audio router server can be arranged in other embodiments of the invention to trim the audio which has been recognised and used to select the intended recipient from the message, and to transmit only that part of the message which was not used for the intended recipient determination.

Whilst the above description concentrates on the operation of the invention prior to the setting up of a PTT call, in another mode the embodiments of the invention can operate during a PTT call (that is, -within the PTT timeout period when messages are expected to be travelling back and forth between two or more parties to a call) to detect a predetermined "end-call" phrase, such as "Over and out", or "End Call", and to operate to close down the call. In this mode of operation the audio stream routed through the audio router server is copied to the speech recognition server, which performs speech recognition on each sent message to detect the predetermined end-call phrase. Note that more than one end-call phrase may be predetermined, and the speech recognition server may detect any of the predetermined phrases. If such a phrase is detected, the speech recognition server signals the audio router server, which closes down the call. At the same time, the speech recognition server may signal the recipient determination server 16, which may sends "call-ended" signal to the visual selector client 104 at the user terminal. In such a case the visual selector client 104 then displays a "call ended" message to the user on the display screen of the mobile station 10. An audio "call ended" output using a synthesised or stored audio message may similarly be sent to the mobile terminal.

In the above-described embodiment, mobiles A and B communicate with the servers using a cellular wireless network. In alternative embodiments, a non-cellular wireless access network such as wireless LAN, Wi-Fi and Bluetooth could be used instead. In further alternative embodiments, one or both terminals could be fixed (e.g. a personal computer).

Unless the context clearly requires otherwise, throughout the description and the claims, the words "comprise", "comprising" and the like are to be construed in an inclusive as opposed to an exclusive or exhaustive sense; that is to say, in the sense of "including, but not limited to".

## Claims

1. A communications method comprising the steps of:-
receiving (s.2.6) at a router server in a communications network an audio stream containing an utterance when a user presses a button on a handset and starts to talk;
buffering (s.2.8) the received audio stream ;
performing a speech recognition process (s.2.16) on the received audio stream to recognise the utterance contained therein;
determining (s.2.16), if possible, an intended receiver of the audio stream in dependence on the recognised utterance; and
if an intended receiver was determined, transmitting (s.2.24) the audio stream to the determined intended receiver using a half-duplex communications service provided by a packet-switched network.

2. A method according to claim 1, wherein when the determining step determines one or more possible intended receivers from the recognised utterance, the method further comprises the steps:
indicating (s.2.30)the one or more possible intended receivers to a user; and
receiving (s.2.34) a selection signal from the user indicating the one or more determined possible intended receivers to which the message should be transmitted.

3. A method according to claim 2, wherein the indicating step further comprises generating an audio speech prompt corresponding to the one or more possible intended receivers; and outputting the generated audio speech prompt to the user.

4. A method according to any of the preceding claims, wherein when the determining step determines a plurality of intended receivers, the audio stream is transmitted to each of the determined receivers using a group call function of the half-duplex communications service.

5. A method according to any of the preceding claims, wherein the speech recognition process is performed only on a portion of the received audio stream.

6. A method according to any of the preceding claims, and further comprising the steps of: receiving (s.2.10) an indication of the identity of a user who generated the audio stream; and selecting (s.2.12) a user-dependent speech grammar for use by the speech recognition process in dependence on the identity of the user.

7. A method according to any of the preceding claims, and further comprising the steps of receiving a speech recognition activation signal from a user, wherein the speech recognition and determining steps are performed in dependence on the receipt of such a signal.

8. A method according to any of the preceding claims, and further comprising the steps of: monitoring audio streams transported by the half-duplex communications service; performing a speech recognition process (s.2.16) on the monitored audio streams to determine the respective utterances contained therein; and, if it is determined that a predetermined utterance is contained in any of the audio streams, signalling that the half-duplex communications service should cease transporting the audio stream.

9. A computer program or suite of computer programs arranged such that when executed by a computer system it/they cause the computer program to perform all the steps of the method of any of the preceding claims.

10. A computer readable storage medium storing a computer program or any one or more of a suite of computer programs according to claim 9.

11. A communications system comprising:-
a handset arranged in operation to both receive an audio stream containing an utterance and forward said audio stream to a router server of a communications network when a user presses a button on said handset and starts to talk;
storage means (142) for buffering the received audio stream;
a speech recogniser (18) arranged in use to recognise the utterance contained within the received audio stream;
receiver determination means (16) arranged to determine, if possible, an intended receiver of the audio stream in dependence on the recognised utterance; and
means (14) for transmitting the audio stream to a determined intended receiver using a half-duplex communications service provided by a packet-switched network, if the intended receiver was determined.

12. A system according to claim 11, and further comprising:
indicating means (16, 104) for indicating one or more possible determined intended receivers to a user; and
means (16) for receiving a selection signal from the user indicating one or more of the possible determined intended receivers to which the audio stream should be transmitted.

13. A system according to claim 12, wherein the indicating means (16) further comprises audio prompt generating means for generating an audio speech prompt corresponding to the one or more of possible intended receivers; and an output (102) for outputting the generated audio speech prompt to the user.

14. A system according to any of claims 11 to 13, wherein when the receiver determination means (16) determines a plurality of intended receivers, the means for transmitting (14) is further arranged to transmit the audio stream to each of the determined receivers using a group call function of the half-duplex communications service.

15. A system according to any of claims 11 to 14, wherein the speech recogniser (18) operates only on a portion of the received audio stream.

16. A system according to any of claims 11 to 15, and further comprising: means (16) for receiving an indication of the identity of a user who generated the audio stream ; and grammar selection means (18, 20) for selecting a user-dependent speech grammar for use by the speech recognition process in dependence on the identity of the user.

17. A system according to any of claims 11 to 16, and further comprising the steps of means for receiving a speech recognition activation signal from a user, wherein the speech recogniser and receiver determination means are operable in dependence on the receipt of such a signal.

18. A system according to any of claims 11 to 17, and further comprising: means (14, 18) for monitoring audio streams transported by the half-duplex communications service; the speech recogniser (18) being further arranged to perform a speech recognition process on the monitored audio streams to determine the respective utterances contained therein; the system further comprising signalling means (18) for signalling that the half-duplex communications service should cease transporting audio streams, if it is determined that a predetermined utterance is contained in any of the audio streams.

## Patentansprüche

1. Kommunikationsverfahren, das die Schritte aufweist:
Empfangen (s.2.6) an einem Router-Server in einem Kommunikationsnetzwerk einen Audiostrom, der eine Äußerung enthält, wenn ein Benutzer einen Knopf an einem Handapparat drückt und zu sprechen beginnt;
Puffern (s.2.8) des empfangenen Audiostroms;
Durchführen eines Spracherkennungsprozesses (s.2.16) auf dem empfangenen Audiostrom, um die darin enthaltene Äußerung zu erkennen;
Bestimmen (s.2.16), wenn möglich, eines beabsichtigten Empfängers des Audiostroms abhängig von der erkannten Äußerung; und
wenn ein beabsichtigter Empfänger bestimmt wurde, Übertragen (s.2.24) des Audiostroms an den bestimmten beabsichtigten Empfängers unter Verwendung eines Halbduplex-Kommunikationsdienstes, der von einem paketvermittelten Netzwerk vorgesehen ist.

2. Verfahren gemäß Anspruch 1, wobei, wenn der Bestimmungsschritt einen oder mehrere mögliche beabsichtigte Empfänger aus der erkannten Äußerung bestimmt, das Verfahren weiter die Schritte aufweist:
Anzeigen (s.2.30) des einen oder der mehreren möglichen beabsichtigten Empfänger(s) an einen Benutzer; und
Empfangen (s.2.34) eines Auswahlsignals von dem Benutzer, das den einen oder die mehreren bestimmten möglichen beabsichtigten Empfänger anzeigt, an den/die die Nachricht gesendet werden soll.

3. Verfahren gemäß Anspruch 2, wobei der Anzeigeschritt weiter aufweist ein Erzeugen einer Audiosprachaufforderung, die dem einen oder den mehreren möglichen beabsichtigten Empfänger(n) entspricht; und Ausgeben der erzeugten Audiosprachaufforderung an den Benutzer.

4. Verfahren gemäß einem der vorhergehenden Ansprüche, wobei, wenn der Bestimmungsschritt eine Vielzahl von beabsichtigten Empfängern bestimmt, der Audiostrom an jeden der bestimmten Empfänger gesendet wird unter Verwendung einer Gruppenanruffunktion des Halbduplex-Kommunikationsdienstes.

5. Verfahren gemäß einem der vorhergehenden Ansprüche, wobei der Spracherkennungsprozess nur auf einem Teil des empfangenen Audiostroms durchgeführt wird.

6. Verfahren gemäß einem der vorhergehenden Ansprüche und weiter die Schritte aufweisend: Empfangen (s.2.10) einer Anzeige der Identität eines Benutzers, der den Audiostrom erzeugt hat; und Auswählen (s.2.12) einer Benutzer-abhängigen Sprachgrammatik zur Verwendung durch den Spracherkennungsprozess abhängig von der Identität des Benutzers.

7. Verfahren gemäß einem der vorhergehenden Ansprüche und weiter die Schritte aufweisend des Empfangens eines Spracherkennungsaktivierungssignals von einem Benutzer, wobei die Spracherkennungs- und Bestimmungsschritte abhängig von dem Empfang eines derartigen Signals durchgeführt werden.

8. Verfahren gemäß einem der vorhergehenden Ansprüche und weiter die Schritte aufweisend: Überwachen von Audioströmen, die von dem Halbduplex-Kommunikationsdienst transportiert werden; Durchführen eines Spracherkennungsprozesses (s.2.16) auf den überwachten Audioströmen, um die jeweiligen Äußerungen zu bestimmen, die darin enthalten sind; und, wenn bestimmt wird, dass eine vorgegebene Äußerung in einem der Audioströme enthalten ist, Signalisieren, dass der Halbduplex-Kommunikationsdienst aufhören soll, den Audiostrom zu transportieren.

9. Computerprogramm oder Suite von Computerprogrammen, das/ die derart ausgebildet ist/ sind, dass, wenn von einem Computersystem ausgeführt, es/sie das Computerprogramm veranlasst/ veranlassen, alle Schritte des Verfahrens gemäß einem der vorhergehenden Ansprüche durchzuführen.

10. Computerlesbares Speichermedium, das ein Computerprogramm oder eines oder mehr einer Suite von Computerprogrammen gemäß dem Anspruch 9 speichert.

11. Kommunikationssystem, das aufweist:
einen Handapparat, der betriebsfähig ausgebildet ist, sowohl einen Audiostrom, der eine Äußerung enthält, zu empfangen als auch den Audiostrom an einen Router-Server eines Kommunikationsnetzwerks weiterzuleiten, wenn ein Benutzer einen Knopf an dem Handapparat drückt und zu sprechen beginnt; Speichermittel (142) zum Puffern des empfangenen Audiostroms; einen Spracherkenner (18), der betriebsfähig ausgebildet ist, die Äußerung zu erkennen, die in dem enthaltenen Audiostrom enthalten ist;
Empfänger-Bestimmungsmittel (16), das ausgebildet ist, wenn möglich, einen beabsichtigten Empfänger des Audiostroms abhängig von der erkannten Äußerung zu bestimmen; und Mittel (14) zum Übertragen des Audiostroms an einen bestimmten beabsichtigten Empfängers unter Verwendung eines Halbduplex-Kommunikationsdienstes, der von einem paketvermittelten Netzwerk vorgesehen ist, wenn der beabsichtigte Empfänger bestimmt wurde.

12. System gemäß Anspruch 11 und weiter aufweisend:
Anzeigemittel (16, 104) zum Anzeigen eines möglichen bestimmten beabsichtigten Empfängers oder mehrerer möglicher bestimmter beabsichtigter Empfänger an einen Benutzer; und
Mittel (16) zum Empfangen eines Auswahlsignals von dem Benutzer, das einen oder mehrere der möglichen bestimmten beabsichtigten Empfänger anzeigt, an den/ die der Audiostrom gesendet werden soll.

13. System gemäß Anspruch 12, wobei das Anzeigemittel (16) weiter aufweist Audioaufforderungserzeugungsmittel zum Erzeugen einer Audiosprachaufforderung, die dem einen oder den mehreren möglichen beabsichtigten Empfänger(n) entspricht; und eine Ausgabe (102) zum Ausgeben der erzeugten Audiosprachaufforderung an den Benutzer.

14. System gemäß einem der Ansprüche 11 bis 13, wobei, wenn das Empfängerbestimmungsmittel (16) eine Vielzahl von beabsichtigten Empfängern bestimmt, das Mittel zur Übertragung (14) weiter ausgebildet ist, den Audiostrom an jeden der bestimmten Empfänger zu senden unter Verwendung einer Gruppenanruffunktion des Halbduplex-Kommunikationsdienstes.

15. System gemäß einem der Ansprüche 11 bis 14, wobei der Spracherkenner (18) nur auf einem Teil des empfangenen Audiostroms arbeitet.

16. System gemäß einem der Ansprüche 11 bis 15 und weiter auf weisend: Mittel (16) zum Empfangen einer Anzeige der Identität eines Benutzers, der den Audiostrom erzeugt hat; und Grammatikauswahlmittel (18, 20) zum Auswählen einer Benutzer-abhängigen Sprachgrammatik zur Verwendung durch den Spracherkennungsprozess abhängig von der Identität des Benutzers.

17. System gemäß einem der Ansprüche 11 bis 16 und weiter aufweisend die Schritte von Mitteln zum Empfangen eines Spracherkennungsaktivierungssignals von einem Benutzer, wobei die Spracherkennungs- und Empfängerbestimmungsmittel abhängig von dem Empfang eines derartigen Signals betriebsfähig sind.

18. System gemäß einem der Ansprüche 11 bis 17 und weiter auf weisend:
Mittel (14, 18) zum Überwachen von Audioströmen, die von dem Halbduplex-Kommunikationsdienst transportiert werden; wobei der Spracherkenner (18) weiter ausgebildet ist, einen Spracherkennungsprozess auf den überwachten Audioströmen durchzuführen, um die jeweiligen Äußerungen zu bestimmen, die darin enthalten sind; wobei das System weiter aufweist Signalisierungsmittel (18) zum Signalisieren, dass der Halbduplex-Kommunikationsdienst aufhören soll, Audioströme zu transportieren, wenn bestimmt wird, dass eine vorgegebene Äußerung in einem der Audioströme enthalten ist.

## Revendications

1. Procédé de communication comprenant les étapes consistant à :
recevoir (étape 2.6) au niveau d'un serveur de routeur, dans un réseau de communication, un flux audio contenant une énonciation lorsqu'un utilisateur appuie sur un bouton situé sur un combiné et commence à parler,
mettre en mémoire tampon (étape 2.8) le flux audio reçu,
exécuter un traitement de reconnaissance de la parole (étape 2.16) sur le flux audio reçu pour reconnaître l'énonciation qui y est contenue,
déterminer (étape 2.16), si possible, un destinataire prévu du flux audio en fonction de l'énonciation reconnue, et
si un destinataire prévu a été déterminé, transmettre (étape 2.24) le flux audio au destinataire prévu et déterminé en utilisant un service de communication en semi-duplex fourni par un réseau à commutation de paquets.

2. Procédé selon la revendication 1, dans lequel, lorsque l'étape de détermination détermine un ou plusieurs destinataires prévus possibles d'après l'énonciation reconnue, le procédé comprend en outre les étapes consistant à :
indiquer (étape 2.30) les un ou plusieurs destinataires prévus possibles à un utilisateur, et
recevoir (étape 2.34) un signal de sélection de l'utilisateur indiquant les un ou plusieurs destinataires prévus possibles et déterminés auxquels le message devrait être transmis.

3. Procédé selon la revendication 2, dans lequel l'étape d'indication comprend en outre la génération d'une invite audio vocale correspondant aux un ou plusieurs destinataires prévus possibles, et la fourniture en sortie de l'invite audio vocale générée à l'utilisateur.

4. Procédé selon l'une quelconque des revendications précédentes, dans lequel lorsque l'étape de détermination détermine une pluralité de destinataires prévus, le flux audio est transmis à chaque destinataire parmi les destinataires déterminés en utilisant une fonction d'appel de groupe du service de communication en semi-duplex.

5. Procédé selon l'une quelconque des revendications précédentes, dans lequel le traitement de reconnaissance de la parole n'est exécuté que sur une partie du flux audio reçu.

6. Procédé selon l'une quelconque des revendications précédentes, et comprenant en outre les étapes consistant à : recevoir (étape 2.10) une indication de l'identité d'un utilisateur qui a généré le flux audio, et sélectionner (étape 2.12) une grammaire de parole dépendant de l'utilisateur à utiliser par le traitement de reconnaissance de la parole en fonction de l'identité de l'utilisateur.

7. Procédé selon l'une quelconque des revendications précédentes, et comprenant en outre les étapes consistant à recevoir un signal d'activation de reconnaissance de la parole d'un utilisateur, dans lequel les étapes de reconnaissance et de détermination de la parole sont exécutées en fonction de la réception d'un tel signal.

8. Procédé selon l'une quelconque des revendications précédentes, et comprenant en outre les étapes consistant à : surveiller les flux audio transportés par le service de communication en semi-duplex, exécuter un traitement de reconnaissance de la parole (étape 2.16) sur les flux audio surveillés pour déterminer des énonciations respectives qui y sont contenues et, s'il est déterminé qu'une énonciation prédéterminée est contenue dans l'un quelconque des flux audio, signaler que le service de communication en semi-duplex devrait cesser de transporter le flux audio.

9. Programme informatique ou suite de programmes informatiques conçus de sorte que, lorsqu'ils sont exécutés par un système informatique, ils amènent le programme informatique à exécuter toutes les étapes du procédé selon l'une quelconque des revendications précédentes.

10. Support de mémorisation lisible par un ordinateur mémorisant un programme informatique ou un programme quelconque ou plusieurs programmes quelconques d'une suite de programmes informatiques selon la revendication 9.

11. Système de communication comprenant :
un combiné agencé en fonctionnement pour à la fois recevoir un flux audio contenant une énonciation et retransmettre ledit flux audio à un serveur de routeur d'un réseau de communication lorsqu'un utilisateur appuie sur un bouton situé sur ledit combiné et commence à parler,
un moyen de mémorisation (142) destiné à mettre en mémoire tampon le flux audio reçu,
un module de reconnaissance de la parole (18) conçu en utilisation pour reconnaître l'énonciation contenue dans le flux audio reçu,
un moyen de détermination de destinataire (16) conçu pour déterminer, si possible, un destinataire prévu du flux audio en fonction de l'énonciation reconnue, et
un moyen (14) destiné à transmettre le flux audio à un destinataire prévu et déterminé en utilisant un service de communication en semi-duplex fourni par un réseau à commutation de paquets, si le destinataire prévu a été déterminé.

12. Système selon la revendication 11, et comprenant en outre :
un moyen d'indication (16, 104) destiné à indiquer un ou plusieurs destinataires prévus possibles et déterminés à un utilisateur, et
un moyen (16) destiné à recevoir un signal de sélection de l'utilisateur indiquant un ou plusieurs des destinataires prévus possibles et déterminés auxquels le flux audio devrait être transmis.

13. Système selon la revendication 12, dans lequel le moyen d'indication (16) comprend en outre un moyen de génération d'invite audio destiné à générer une invite audio vocale correspondant aux un ou plusieurs destinataires prévus possibles, et une sortie (102) destinée à fournir en sortie l'invite audio vocale générée à l'utilisateur.

14. Système selon l'une quelconque des revendications 11 à 13, dans lequel, lorsque le moyen de détermination de destinataire (16) détermine une pluralité de destinataires prévus, le moyen de transmission (14) est en outre conçu pour transmettre le flux audio à chacun des destinataires déterminés en utilisant une fonction d'appel de groupe du service de communication en semi-duplex.

15. Système selon l'une quelconque des revendications 11 à 14, dans lequel le module de reconnaissance de la parole (18) n'agit que sur une partie du flux audio reçu.

16. Système selon l'une quelconque des revendications 11 à 15, et comprenant en outre : un moyen (16) destiné à recevoir une indication de l'identité d'un utilisateur qui a généré le flux audio, et un moyen de sélection de grammaire (18, 20) destiné à sélectionner une grammaire de parole dépendant de l'utilisateur à utiliser par le traitement de reconnaissance de la parole en fonction de l'identité de l'utilisateur.

17. Système selon l'une quelconque des revendications 11 à 16, et comprenant en outre un moyen destiné à recevoir un signal d'activation de reconnaissance de la parole d'un utilisateur, le module de reconnaissance de la parole et le moyen de détermination de destinataire pouvant être mis en oeuvre en fonction de la réception d'un tel signal.

18. Système selon l'une quelconque des revendications 11 à 17, et comprenant en outre : un moyen (14, 18) destiné à surveiller les flux audio transportés par le service de communication en semi-duplex, le module de reconnaissance de la parole (18) étant en outre conçu pour exécuter un traitement de reconnaissance de la parole sur les flux audio surveillés pour déterminer les énonciations respectives qui y sont contenues, le système comprenant en outre un moyen de signalisation (18) destiné à signaler que le service de communication en semi-duplex devrait cesser de transporter des flux audio, s'il est déterminé qu'une énonciation prédéterminée est contenue dans l'un quelconque des flux audio.
